# EUROPEAN PATENT SPECIFICATION

(11) **EP 1 897 682 B1**
(45) Date of publication and mention of the grant of the patent: **31.03.2010**
(21) Application number: 07425546.4
(22) Date of filing: 31.08.2007
(51) Int. Cl.: B31F 1/07

(54) **Method and device for producing an embossed and colored web material**
Verfahren und Vorrichtung zur Herstellung eines geprägten und gefärbten Bahnmaterials
Procédé et dispositif pour la production d'un matériau de toile coloré et gaufré

(30) Priority: 06.09.2006 IT FI20060218
(43) Date of publication of application: 12.03.2008
(73) Proprietor: Delicarta SPA, 55016 Porcari (Lucca) (IT)
(72) Inventor: Stefani, Emi, 55016 Porcari, Lucca (IT)
(74) Representative: Mannucci, Michele

(56) References cited:
- EP-A- 1 493 552
- US-A1- 2003 198 788
- US-A1- 2004 209 050

## Description

### Technical Field

The present invention relates to a device for processing a web material, such as and typically tissue paper for producing rolls of kitchen towel or toilet paper, paper napkins or other products.

The invention also relates to a method for processing web materials, typically but not exclusively paper, such as tissue paper and the like.

### State of the Art

To produce tissue paper articles, such as toilet paper and in particular kitchen towel, napkins or the like, there are used one or more sheets or plies of web material variously decorated and processed to increase the aesthetic, tactile and technical properties, such as, in particular, apparent thickness and capacity to absorb liquids.

In particular, so-called embossing processes are provided, wherein one or more web materials are permanently deformed, passing between rollers provided with protuberances and recesses, or between rollers provided with protuberances operating against pressure rollers with an elastic outer surface, for example made of rubber or the like. The web material that passes between an embossing roller provided with protuberances and a counter-roller provided with recesses or elastically yielding is deformed to form a plurality of permanent protuberances. Frequently, several plies are joined after at least one of them has been embossed and joining is normally obtained by applying a glue to the protuberances or to part of the protuberances of one of the plies.

Embossing can take place according to various techniques. According to a first process, known as "tip-to-tip" embossing, two plies are embossed between respective embossing rollers and pressure rollers and then joined and laminated passing through the nip defined between the embossing rollers, opposed and phased so that at least part of the protuberances of one ply are disposed to coincide with at least part of the protuberances of the other ply.

According to a different technique, known as "nested" embossing, the two plies embossed separately between respective pressure rollers and embossing rollers are joined so that the protuberances of one ply are inserted between the recesses of the other ply.

In other known devices, a first ply is embossed with a pattern through an embossing roller cooperating with a pressure roller; to this first ply at least a second ply is subsequently applied by gluing. Joining of the plies is obtained by lamination between the embossing roller and a laminating roller arranged along the path of the first ply around the embossing roller, downstream of the pressure roiier and of the glue applicator.

In some cases gluing is performed with colored glues so as to generate on the plies a pattern similar to a printed pattern, but formed by the color of the glue distributed in a pattern on all or on part of the embossed protuberances on one, on the other, or on both plies.

EP-A-1493552 describes an embossing system of this type. In this known device, to obtain products with different colors and decorations using a same embossing roller, said roller is divided into portions or sectors, each of which can present a different design to the adjacent sectors. Cooperating with the embossing roller is a glue applicator designed and arranged to apply glues colored with different colors in the various sectors into which the embossing roller is divided. In this way, a continuous multi-ply web material, divided into longitudinal strips or bands, is delivered from the embossing-laminating unit, wherein each band is characterized by a distinct color and/or by a distinct decoration variable with respect to the decorations and to the colors of the adjacent bands.

To obtain the variable coloring from one sector to another of the embossing roller special gluing units are used in which there are provided, for example, a glue applicator roller, an anilox roller and a glue dispenser with a doctor blade, which has areas longitudinally aligned according to the axis of the rollers and separate from one another to apply the glues with different colorings to the adjacent bands of web material leaving, between one band and the other, a "buffer" area, i.e. an area without glue. This area is necessary to prevent the glues of different colors from mixing in the area of transition from one longitudinal band to the next, thus forming defects in coloring in the areas of separation between one band and the adjacent band.

The web material processed with this type of embosser is then divided into strips with longitudinal cuts along the buffer areas, i.e. the areas without color. Each band is wound to form a respective roll, so that the various rolls obtained present different decorations and/or colorings from roll to roll. Alternatively, the web material embossed and colored in longitudinal bands or strips is wound to form a single roll, or log, of considerable axial length, which is then divided with cuts orthogonal to the axis to form the single rolls intended to be marketed. In this case, the transverse cuts of the log, obtained with a cutting machine, are made in the areas without colored glue between one band and the next, so as to obtain, also in this case, rolls different from one another in color and/or decoration.

The need to provide an area without glue between one longitudinal band and the other, i.e. between one longitudinal strip and the other of the embossed web material, gives rise to a finished product that is characterized by longitudinal edges without coloring.

### Objects and summary of the invention

An object of the present invention is to produce a device and a method that make it possible to obtain materials embossed and decorated with a colored glue that do not present edge areas without color due to the need to maintain buffer areas during distribution of the colored glue.

In substance, according to a first aspect, there is provided a method for producing a multi-ply embossed web material comprising the steps of:
- feeding at least a first ply of web material around an embossing roller of an embossing unit;
- embossing said at least one first ply, generating thereon embossing protuberances through protrusions of said embossing roller;
- applying to said at least one first ply of web material at least two glues of different colors on adjacent longitudinal portions spaced from one another by a longitudinal band without glue of said first ply;
- joining at least one second ply to said at least one first ply by gluing;
- producing at least on said first ply a printed pattern on said band without glue.

In this manner, the band or strip without glue that separates two adjacent longitudinal areas, strips or portions is masked with the print, so that the edges of the finished product are decorated completely instead of being characterized by an area without color.

According to a possible embodiment, the glues that are applied to the two longitudinal strips or portions of the ply material are applied when said material is still engaged on the embossing roller or cylinder.

As a rule, the printed pattern can be applied after embossing and applying glue to the piy. However, in a particularly advantageous embodiment of the invention, printing is carried out before embossing, on strips or bands corresponding to the areas that will be without colored glue.

The printed pattern can be provided on both plies or on only one of them, typically the one that is embossed and that receives the glue to be joined to the other of the two plies.

The printed pattern applied to the longitudinal bands or areas without glue can have a lesser width than that of the areas without glue or, preferably, a width approximately equal to and even more preferably greater than the area without colored glue.

The web material obtained by joining the plies processed as indicated above is cut longitudinally before winding or after winding (cutting each log produced into single rolls using a cutting machine) along the longitudinal portions or bands on which printing was performed. Advantageously, the width of the print is greater than the width of the area without colored glue so that on the edges of the finished product there will be printed areas that cover both the longitudinal edge portion without colored glue and, at least in part, the embossed areas.

As a rule, the areas without glue or buffer areas must be provided only in the transition area between portions of web material to which the glues of different color are applied, as in these areas there is the risk of a glue of one color being contaminated by the glue of a different color characterizing the adjacent area. However, according to an advantageous embodiment, to obtain a finished product with uniform characteristics, i.e. characterized by central colored embossing and by printed longitudinal edges, according to an advantageous and preferred embodiment there are provided buffer areas, i.e. without colored glue, on the longitudinal extension of the embossing roller and of the glue applicator rollers at each point in which the web material will be cut into strips or rolls. A print will be provided in all these areas. According to a different embodiment, the buffer area is provided only in the transition from a glue of one color to a glue of a different color.

When the area characterized by a glue presents a width equal to a multiple of the width of the strip forming the single finished product, for example the single roll of toilet paper, kitchen towel or the like, printed bands can advantageously be produced on each longitudinal line of the web material along which the cut will subsequently be made to separate one product from the other. The area of transition from a glue of one color to the glue of a different color will have no colored glue and will have a print. In the intermediate areas, embossing glued with a colored glue and printing will be superimposed. Alternatively, to obtain uniform edges on all the finished products, between one longitudinal band intended to form a product and the adjacent longitudinal band there can be areas without colored glue characterized solely by a print.

According to a further aspect of the invention, there is provided a device comprising:
- a path for a first ply of web material;
- along said path at least one embossing roller, with a surface provided with embossing protrusions and cooperating with a counter-roller;
- a glue dispenser unit cooperating with said embossing roller and configured to apply to at least one first ply of web material at least two glues of different colors on adjacent longitudinal portions spaced from one another by a longitudinal band without glue of said first ply;
- a printing unit of said at least one first ply, disposed and configured to provide a printed pattern on said at least one first ply, on said longitudinal band without glue.

According to an advantageous embodiment, the printing unit can advantageously be arranged along the feed path of the first ply upstream of the embossing unit. In another embodiment of the invention, an analogous printing unit can be arranged along the path of the second ply. In this case the second printing unit will advantageously be arranged upstream of the lamination nip between the embossing roller and the laminating roller that joins the plies.

A further aspect of the invention relates to a multi-ply material, typically, but not exclusively, made of tissue paper, such as a roll of toilet paper, kitchen towel or the like, a napkin, wherein at least one of the two plies is embossed and which presents two lateral bands without colored glue, on which a printed pattern is disposed.

Further advantageous characteristics and embodiments of the method, of the device and of the product according to the present invention are indicated hereafter and in the appended dependent claims.

### Brief description of the drawings

The invention will be better understood by following the description and accompanying drawing, which shows a practical non-limiting embodiment of the invention. In more particular, in the drawing:
figure 1 shows a schematic side view of a device according to the invention;
figures 2, 3 and 4 show an example of an embossing roller or cylinder, of a corresponding glue applicator roller and of an anilox roller to pick up glue from the dispenser and to transfer it to the applicator roller;
figure 5 shows a portion of decorated and embossed web material delivered from the embossing unit; and
figure 6 shows an example of a roll of wound web material obtained with the process and the device according to the invention.

### Detailed description of an embodiment of the invention

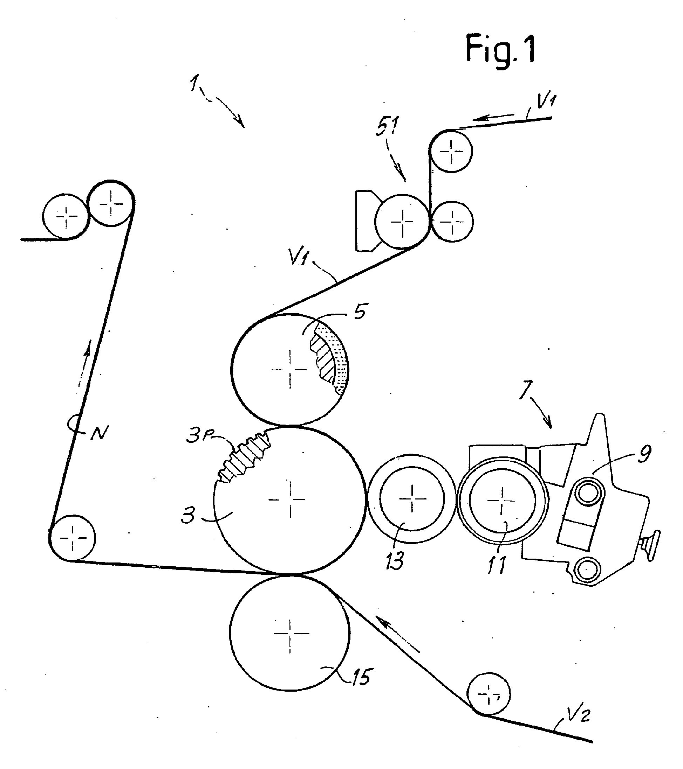

With initial reference to figure 1, there will be described the application of the invention to a specific embossing device, or embossing-laminating device wherein a single ply V1 is embossed and provided with glue and then laminated to a second ply V2 as a result of lamination between an embossing roller and a laminating roller. However, it must be understood that the principles on which the present invention is based can also be applied to embossing or embossing laminating units of other type and in general to any embossing unit wherein it is possible to apply glues with different colors to adjacent longitudinal areas or bands of a same web material.

With initial reference to figure 1, the numeral 1 indicates as a whole an embossing or embossing-laminating unit, to which a first ply V1 and a second ply V2 of web material are fed.

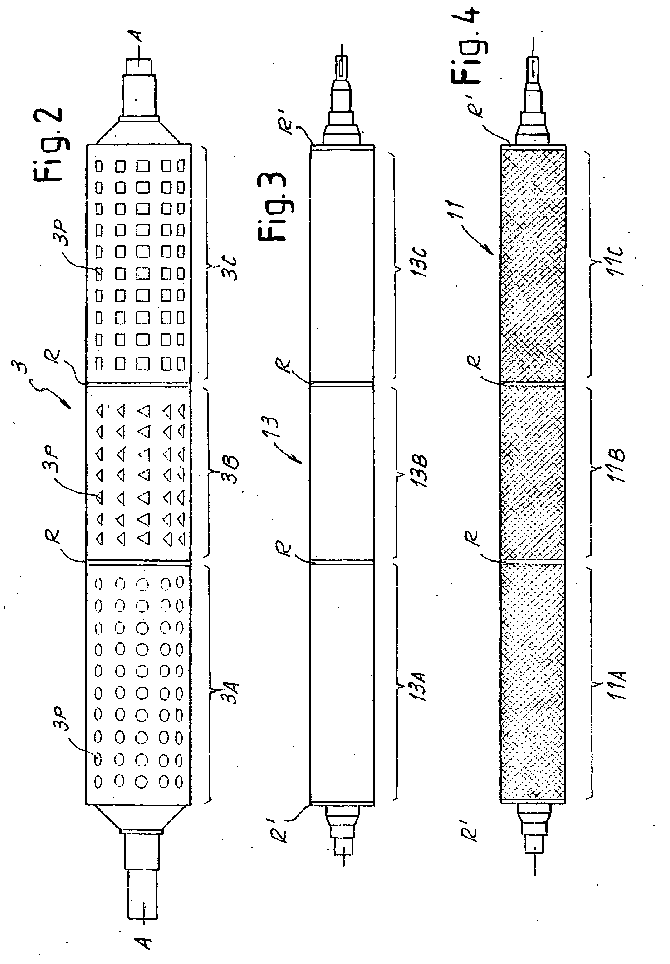

The embossing-laminating unit 1 comprises an embossing roller 3, the surface of which is provided with protuberances 3P shown schematically in figure 1. The embossing roller 3, the structure of which will be shown in greater detail with reference to figure 2, cooperates with a pressure roller 5 covered in a resilient material, such as rubber. The roller 5 is pressed against the surface of the embossing roller 3 so that the web material or ply V1 fed into the nip between the roller 5 and the embossing roller 3 is embossed to form protuberances directed radially outwardly with respect to the embossing roller 3.

Downstream of the pressure roller 5, a gluing unit 7 cooperates with the embossing roller 3 to distribute a glue on the protuberances of the ply V1 that are still engaged on the protuberances 3P of the embossing roller 3. The gluing unit 7 comprises a glue dispenser 9 with doctor blade, for example of the type described in EP-A-1493552, the content of which is incorporated in the present description. The glue dispensed by the dispenser 9 is picked up by a screened or anilox roller 11 that transfers it to an applicator roller 13 cooperating with the embossing roller 3. The applicator roller 13 can be provided with a plate to apply the glue according to a pattern, or it can be smooth and apply the glue to all the protuberances of greater height produced on the ply V1.

As will be explained in greater detail below, the gluing unit 7 is configured to distribute glues of different colors on different and adjacent areas of the ply material V1 to obtain bands or strips of material decorated with different colors.

Downstream of the gluing unit 7 a laminating roller 15 cooperates with the embossing roller 3. In the nip between the embossing roller 3 and the laminating roller 15 there is fed, in addition to the ply V1 provided with the glue applied by the gluing unit 7, a second ply V2, which is glued to the ply V1 by lamination. The letter N indicates the multi-ply web material delivered from the embossing roller. The web material N can be fed to a machine for producing napkins, to a rewinder, or to another processing machine of a type known per se.

Figure 2 schematically shows an embodiment of the embossing roller 3. In this schematic representation the embossing roller 3 has a cylindrical surface divided into three sectors indicated with 3A, 3B and 3C respectively. According to an advantageous embodiment, the protuberances 3P of the embossing roller in the three areas or sectors 3A, 3B, 3C can have different shapes from sector to sector to produce a different decoration on each of the longitudinal bands or strips into which the web material N is divided. However, it would also be possible for the embossing pattern to be the same in all three sectors.

Between adjacent sectors 3A, 3B and 3C there are located areas R, hereinafter indicated as buffer areas, i.e. annular bands or strips in which no glue is applied. Analogous annular bands or strips R' are provided at the ends of the roller 3.

Figure 3 schematically shows the glue applicator roller 13. Also this roller is divided into three sectors 13A, 13B and 13C with position and longitudinal extension equal or substantially equal to those of the sectors 3A, 3B and 3C into which the embossing roller 3 is divided. Separation areas between the sectors 13A, 13B and 13C are again indicated with R and are aligned with the annular areas R of the embossing roller or cylinder 3. The end annular areas or strips are indicated with R'.

Figure 4 schematically shows the anilox roller 11. This roller is divided, in the same way as the glue applicator roller 13, into three sectors indicated with 11A, 11B and 11C longitudinally arranged one after the other. The annular areas separating the sectors 11A, 11B and 11C are again indicated with R and the end annular areas or strips with R'.

It must be understood that the division of the rollers 3, 11, 13 into sectors can differ from that shown. In particular, a greater number of sectors distributed longitudinally on the three rollers can be provided; moreover, it would also be possible to provide sectors whose axial extension differs from one another or is the same as one another. Typically, each sector will have a dimension parallel to the axis of the respective roller equal to the width of the final product that is obtained from the processing line in which the embossing-laminating unit is incorporated.

With a configuration of the dispenser 9 of known type, on the three sectors 11A, 11B and 11C of the anilox roller 11 there are distributed glues of different colors which, through passage on the applicator roller 13, are distributed on the protuberances formed on the ply V1 by the deformation imparted by the protuberances 3P of the single sectors 3A, 3B and 3C of the embossing roller 3.

In this way, each longitudinal band of the ply V1 corresponding to the sectors 3A, 3B and 3C of the embossing roller 3 is decorated with a different color. The colors of the various bands are not mixed due to the buffer area R, i.e. the annular band without glue that is generated on the ply V1. It must be understood that this buffer area can also be generated even if no annular strips or bands R without protuberances are provided on the embossing roller 3. In fact, what is important is that areas R are provided on the anilox roller 11 and on the glue applicator roller 13. The areas R separating the sectors 3A, 3B and 3C on the embossing roller 3 are provided for a clearer separation of the different embossing patterns in the three sectors. However, it must be understood that in a possible embodiment of the invention the protuberances in the three sectors can also be the same as one another, in which case the longitudinal bands on the ply V1 will be differentiated by color but not by embossing pattern.

In order to prevent the formation of undecorated areas on the longitudinal edges of the finished product, according to the invention the embossing-laminating unit 1 comprises a printing unit 51 arranged along the path of the ply V1. The printing unit 51, schematically shown in figure 1, can comprise a single printing roller and counter-roller pair, wherein on the printing or plate roller there is arranged a plate that uses a printed or micro-printed pattern only on the annular bands of the ply V1 that will correspond to the buffer areas R and R' described above. Vice versa, a plurality of adjacent printing units can be provided, one for each buffer area to be printed.

According to a possible embodiment of the invention, an analogous printing unit or assembly of printing units can be arranged along the path of the ply V2.

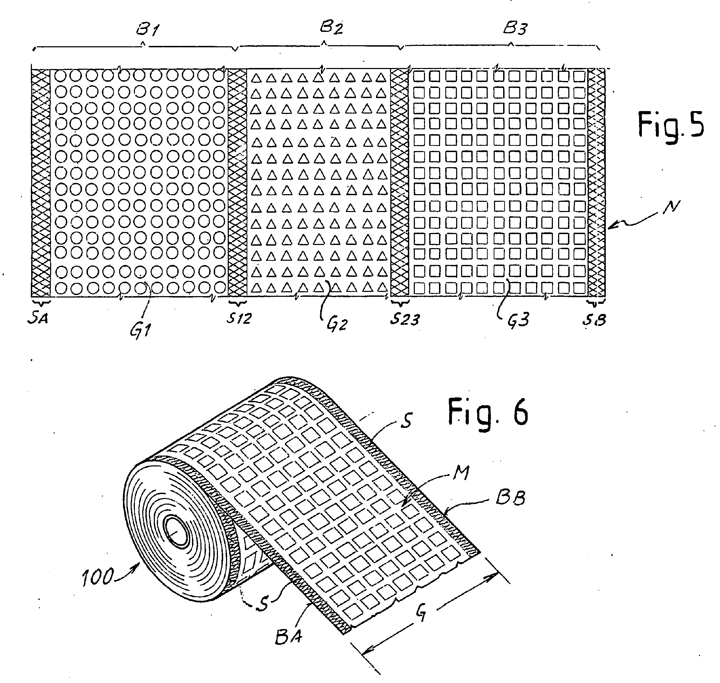

Figure 5 schematically shows the result of the combination of embossing and gluing with colored glues and printing in the buffer areas R and R'. Figure 5 shows a portion of the web material N delivered from the embossing-laminating unit 1. Three bands B1, B2 and B3 can be seen on the web material, corresponding to the three annular sectors 3A, 3B and 3C of the embossing roller 3. In the central area of the three bands an embossed pattern is produced, indicated with G1, G2 and G3 in the three areas. The embossing pattern of each area or band B1, B2 and B3 is preferably characterized by different colors and different embossing decorations obtained as described above. Each embossed area G1, G2 and G3 is separated from the adjacent areas by a portion of web material with a print obtained through the printing unit 51. The two printed areas between the embossed band G1 and the embossed band G2 and between the embossed band G2 and the embossed band G3, are indicated respectively with S12 and S23. Moreover, on the longitudinal edges of the web material N there are provided two bands SA and SB also printed analogously to the bands or strips S12 and S23.

The print on the areas SA, S12, S23 and SB can be produced with patterns of shapes and colors coordinated with those obtained by embossing and gluing on the bands G1, G2 and G3. For example, coordinated colors and also coordinated motifs can be used. The embossed patterns can be floral motifs and the printed patterns can also be floral motifs, possibly of different dimensions. In particular, in consideration of the small transverse dimensions of the strips or areas SA, S12, S23 and SB, the printed motifs produced in these areas can be of average dimensions substantially smaller with respect to the dimensions of the embossed designs of the areas G1, G2 and G3.

Figure 6 shows a roll obtained by winding and transverse cutting of the web material N thus produced. The roll, indicated generically with 100, is constituted by the web material N on which there is located a central embossed band G which will be colored on at least part of the embossing protuberances with a uniform color corresponding to the color of the glue used to glue the protuberances in this area. On the longitudinal edges BA and BB of the material M there are provided two areas or bands decorated with printing and indicated with S.

The web material M forming the roll 100 has been obtained by cutting the web material N along the printed strips produced thereon. The lateral printed strips SA and SB are also cut to eliminate the trimmings. The width of these areas is chosen so that on the first roll or on the last roll produced by cutting the log formed by winding of the web material N there are generated printed areas S of a width substantially equivalent to that of the lateral bands obtained by cutting along the intermediate printed strips S12 and S23.

It can be seen in figure 6 that the finished product is completely decorated on the entire surface thereof, up to the longitudinal edges BA and BB, notwithstanding the fact that the colored glue was applied leaving buffer areas corresponding to the edge portions of the material. It is thus possible to obtain from the same machine, with a decoration system using colored glue, rolls with different colors to one another but decorated entirely up to the edge.

It is understood that as a rule it is possible for two or more of the areas corresponding to the sectors 3A, 3B and 3C into which the embossing roller 3 is divided to be glued with glues of the same color. For example, the areas corresponding to the sectors 3A and 3B could be the same color, while the area corresponding to the sector 3C could be colored with a glue of different color. Nonetheless, also in this case it is advisable to provide buffer areas R, which also separate the areas or sectors 3A and 3B with the same color from each other, so that the finished products obtained with the production line in which the embossing unit 1 is incorporated are all provided with printed decorative strips on the edges BA and BB.

It is understood that the drawing only shows an example provided purely as a practical arrangement of the invention, and that said invention can vary in forms and arrangement without however departing from the scope of the concept on which the invention is based. Any reference numerals in the appended claims are provided to facilitate reading of the claims with reference to the description and to the drawing, and do not limit the scope of protection represented by the claims.

## Claims

1. A method for producing a multi-ply embossed web material, comprising the steps of:
- feeding at least one first ply (V₁) of web material around an embossing roller (3) of an embossing unit;
- embossing said at least one first ply (V₁), generating thereon embossing protuberances through protrusions of said embossing roller (3),
- applying to said at least one first ply of web material glue on adjacent longitudinal portions spaced from one another by a longitudinal band without glue of said first ply (V₁),
- joining at least one second ply (V₂) to said at least one first ply (V₁) by gluing;
**characterized by** producing at least on said first ply (V₁) a printed pattern in correspondence of said band without glue.

2. Method according to claim 1, **characterized in that** glue of different colors is applied on said adjacent longitudinal portions of said ply (V₁) of web material.

3. Method as claimed in claim 1 or 2, **characterized by** applying said glue to protuberances of the first ply when said first ply (V₁) is engaged on said embossing roller.

4. Method as claimed in claim 1 or 2 or 3, **characterized in that** said printed pattern is applied to said first ply (V₁) before embossing.

5. Method as claimed in one or more of the preceding claims, **characterized by** applying a printed pattern also to the second ply (V₂), in an area corresponding to said band without glue.

6. Method as claimed in one or more of the preceding claims, **characterized in that** said printed pattern is applied for a width equal to or slightly greater than the width of said band without glue.

7. Method as claimed in one or more of the preceding claims, **characterized by** applying to said at least one first ply (V₁), along a plurality of adjacent longitudinal portions, glue of the same or different colors for the longitudinal portions, there being produced, between each longitudinal portion and the adjacent one, a band without glue.

8. Method as claimed in claim 7, **characterized by** producing a print on each of said bands without glue.

9. Method as claimed in one or more of the preceding claims, **characterized by** cutting said web material longitudinally along at least some of said bands without glue.

10. Method as claimed in one or more of the preceding claims, **characterized by** winding said web material in logs and cutting said logs orthogonally to their axis into a plurality of rolls, along at least some of said bands without glue.

11. Method as claimed in claim 9 or 10, **characterized in that** said web material is cut so as to divide the printed pattern along an intermediate line, so that part of the printed pattern remains on a first roll and part on a second roll adjacent to the first roll.

12. Method as claimed in one qr more of the preceding claims, **characterized by** embossing said second ply (V₂).

13. A device (1) for decorating a multi-ply web material, comprising:
- a path for a first ply (V₁) of web material;
- along said path at least one embossing roller (3), with a surface provided with embossing protrusions and cooperating with a counter-roller;
- a glue dispenser unit (7) cooperating with said embossing roller (3) and configured to apply to at least one first ply (V₁) of web material glue on adjacent longitudinal portions spaced from one another by a longitudinal band without glue of said first ply;
**characterized in that** it comprises a printing unit (51) of said at least one first ply (V₁), arranged and designed to produce a printed pattern on said at least a first ply (V₁), in correspondence of said longitudinal band without glue.

14. Device (1) according to claim 13, **characterized in that** said glue dispenser (7) is designed and arranged to apply glue of different colors on said adjacent longitudinal portions of said first ply (V₁).

15. Device (1) as claimed in claim 13 or 14, **characterized in that** said printing unit (51) is arranged along said feed path of said first ply (V₁) upstream of the embossing unit.

16. Device (1) as claimed in claim 13 or 14, **characterized in that** said printing unit (51) is arranged along said feed path of said first ply (V₁) downstream of the embossing unit.

17. Device (1) as claimed in claim one or more of claims 13 to 16, **characterized in that** it comprises a second path for a second ply (V₁) of web material, and pressure means to glue said first ply (V₁) and said second ply together.

18. Device (1) as claimed in claim 17, **characterized in that** along said second path there is arranged a second embossing roller.

19. Device (1) as claimed in claim 17 or 18, **characterized in that** along said second path there is arranged a second printing unit in phase with the first printing unit to decorate the second ply (V₂) to coincide with the printed pattern of the first ply.

20. A product made of a multi-ply sheet of tissue paper, comprising at least two plies joined together by gluing with a colored glue, applied to at least some of a plurality of embossing protuberances provided on at least one of said plies, **characterized in that** it presents two lateral bands (SA, SB, BA, AB) without colored glue, on which there is disposed a printed decoration.

21. Product as claimed in claim 20, **characterized in that** said printed decoration does not protrude or protrudes only limitedly from said lateral bands, the remaining area of the product to which said glue is applied being substantially free of said printed pattern.

22. Product as claimed in claim 20 or 21, **characterized in that** it is constituted by a roll of wound web material, said two lateral bands being provided along the longitudinal edges of the web material.

## Patentansprüche

1. Verfahren zur Herstellung eines mehrlagigen geprägten Bahnmaterials, umfassend die Schritte:
- Förderung wenigstens einer ersten Lage (V1) um eine Prägerolle (3) einer Prägeeinheit;
- Prägen der wenigstens einen ersten Lage (V1) unter einer Ausbildung von Prägeausstülpungen durch Vorsprünge der Prägerolle (3);
- Aufbringen eines Klebers auf die wenigstens eine erste Lage des Bahnmaterials in benachbarten, voneinander durch einen Längsbereich ohne Kleber beabstandeten Längsteilen der ersten Lage (V1);
- Verbinden wenigstens einer zweiten Lage (V2) mit der wenigstens ersten Lage (V1) durch Kleben;
**gekennzeichnet durch** das Erzeugen eines gedruckten Musters zumindest auf der ersten Lage (V1) in Übereinstimmung mit dem Bereich ohne Kleber.

2. Verfahren nach Anspruch 1, **dadurch gekennzeichnet, dass** ein Kleber unterschiedlicher Farben auf die benachbarten Längsteile der Lage (V1) des Bahnmaterials aufgebracht wird.

3. Verfahren nach Anspruch 1 oder 2, **gekennzeichnet durch** ein Aufbringen des Klebers auf Ausstülpungen der ersten Lage, wenn die erste Lage (V1) im Eingriff mit der Prägerolle steht.

4. Verfahren nach Anspruch 1, 2 oder 3, **dadurch gekennzeichnet, dass** das gedruckte Muster auf die erste Lage (V1) vor dem Prägen aufgebracht wird.

5. Verfahren nach einem oder mehreren der vorhergehenden Ansprüche, **gekennzeichnet durch** das Aufbringen eines gedruckten Musters auch auf die zweite Lage (V2) in einem dem Bereich ohne Kleber entsprechenden Bereich.

6. Verfahren nach einem oder mehreren der vorhergehenden Ansprüche, **dadurch gekennzeichnet, dass** das gedruckte Muster über eine Breite aufgebracht wird, die gleich oder geringfügig größer als die Breite des Bereichs ohne Kleber ist.

7. Verfahren nach einem oder mehreren der vorhergehenden Ansprüche, **gekennzeichnet durch** das Aufbringen eines Klebers derselben oder unterschiedlicher Farben für die Längsteile auf die wenigstens eine erste Lage (V1) entlang einer Vielzahl von benachbarten Längsteilen, wobei zwischen jedem Längsteil und dem benachbarten ein Bereich ohne Kleber hergestellt wird.

8. Verfahren nach Anspruch 7, **gekennzeichnet durch** das Erzeugen eines Drucks auf jedem der Bereiche ohne Kleber.

9. Verfahren nach einem oder mehreren der vorhergehenden Ansprüche, **gekennzeichnet durch** ein Schneiden des Bahnmaterials der Länge nach entlang wenigstens einiger der Bereiche ohne Kleber.

10. Verfahren nach einem oder mehreren der vorhergehenden Ansprüche, **gekennzeichnet durch** ein Aufwickeln des Bahnmaterials in Bunde und Schneiden der Bunde senkrecht zu ihrer Achse in eine Vielzahl von Rollen entlang zumindest einiger der Bereiche ohne Kleber.

11. Verfahren nach Anspruch 9 oder 10, **dadurch gekennzeichnet, dass** das Bahnmaterial so geschnitten wird, dass das gedruckte Muster entlang einer Zwischenlinie geteilt wird, sodass ein Teil des gedruckten Musters auf einer ersten Rolle und ein Teil auf einer zweiten, der ersten Rolle benachbarten verbleibt.

12. Verfahren nach einem oder mehreren der vorhergehenden Ansprüche, **gekennzeichnet durch** ein Prägen der zweiten Lage (V2).

13. Vorrichtung (1) zum Ausschmücken eines mehrlagigen Bahnmaterials, umfassend:
- eine Bahn für eine erste Lage (V1) des Bahnmaterials;
- wenigstens eine mit einer Gegenrolle zusammenwirkende Prägerolle (3) entlang dieser Bahn mit einer Oberfläche, die mit Prägevorsprüngen versehen ist;
- eine Spendeeinrichtung (7) für einen Kleber, die mit der Prägerolle (3) zusammenwirkt und ausgestaltet ist, um auf wenigstens eine erste Lage (V1) des Bahnmaterials einen Kleber auf benachbarte, voneinander durch einen Längsbereich ohne Kleber voneinander beabstandete Längsteile der ersten Lage (V1) aufzubringen;
**dadurch gekennzeichnet, dass** sie eine Druckereinrichtung (51) für die wenigstens eine erste Lage (V1) umfasst, angeordnet und ausgebildet, um ein gedrucktes Muster auf der wenigstens einen ersten Lage (V1) in Übereinstimmung mit dem Längsbereich ohne Kleber zu erzeugen.

14. Vorrichtung (1) nach Anspruch 13, **dadurch gekennzeichnet, dass** der Spender (7) für den Kleber ausgebildet und angeordnet ist, um Kleber unterschiedlicher Farben auf die benachbarten Längsabschnitte der ersten Lage (V1) aufzubringen.

15. Vorrichtung (1) nach Anspruch 13 oder 14, **dadurch gekennzeichnet, dass** die Druckereinrichtung (51) entlang der Förderbahn der ersten Lage (V1) stromaufwärts der Prägeeinheit angeordnet ist.

16. Vorrichtung (1) nach Anspruch 13 oder 14, **dadurch gekennzeichnet, dass** die Druckereinrichtung (51) entlang der Förderbahn der ersten Lage (V1) stromabwärts der Prägeeinheit angeordnet ist.

17. Vorrichtung (1) nach einem oder mehreren der Ansprüche 13 bis 16, **dadurch gekennzeichnet, dass** sie eine zweite Bahn für eine zweite Lage (V2) eines Bahnmaterials und Andrückmittel aufweist, um die erste Lage (V1) und die zweite Lage zusammenzukleben.

18. Vorrichtung (1) nach Anspruch 17, **dadurch gekennzeichnet, dass** entlang der zweiten Bahn eine zweite Prägerolle angeordnet ist.

19. Vorrichtung (1) nach Anspruch 17 oder 18, **dadurch gekennzeichnet, dass** entlang der zweiten Bahn eine zweite Druckeinrichtung in Phase mit der ersten Druckereinrichtung vorgesehen ist, um die zweite Lage (V2) übereinstimmend mit dem gedruckten Muster der ersten Lage auszuschmücken.

20. Produkt aus einem mehrlagigen Blatt eines Tissue-Papiers, umfassend wenigstens zwei miteinander durch ein Kleben mit einem gefärbten Kleber verbundene Lagen, der auf wenigstens einige einer Vielzahl von Prägevorsprüngen aufgebracht ist, die auf zumindest einer der Lage vorgesehen sind, **dadurch gekennzeichnet, dass** es zwei seitliche Bereiche (SA, SB, BA, BB) ohne gefärbtem Kleber aufweist, auf denen eine gedruckte Ausschmückung vorgesehen ist.

21. Produkt nach Anspruch 20, **dadurch gekennzeichnet, dass** die gedruckte Ausschmückung nicht oder nur begrenzt von den seitlichen Bereichen vorsteht, während die verbleibende Fläche des Produkts, auf die der Kleber aufgebracht ist, im Wesentlichen frei vom gedruckten Muster bleibt.

22. Produkt nach Anspruch 20 oder 21, **dadurch gekennzeichnet, dass** es durch eine Rolle eines gewickelten Bahnmaterials gebildet ist, wobei die beiden seitlichen Bereiche entlang der Längsränder des Bahnmaterials vorgesehen sind.

## Revendications

1. Procédé de production d'un matériau de toile gaufré multicouche, comprenant les étapes consistant à :
- amener au moins une première couche (V1) de matériau de toile autour d'un rouleau de gaufrage (3) d'une unité de gaufrage ;
- gaufrer ladite au moins une première couche (V1), générant sur celle-ci des protubérances de gaufrage à travers des saillies sur ledit rouleau de gaufrage (3) ;
- appliquer de la colle sur ladite au moins une première couche de matériau de toile sur des parties longitudinales adjacentes espacées les unes des autres par une bande longitudinale sans colle de ladite première couche (V1) ;
- relier au moins une seconde couche (V2) à ladite au moins une première couche (V1) par collage ;
**caractérisé par** l'étape consistant à produire un motif imprimé en correspondance de ladite bande sans colle sur ladite première couche (V1).

2. Procédé selon la revendication 1, **caractérisé en ce que** de la colle de différentes couleurs est appliquée sur lesdites parties longitudinales adjacentes de ladite couche (V1) de matériau de toile.

3. Procédé selon la revendication 1 ou 2, **caractérisé par** l'étape consistant à appliquer ladite colle sur les protubérances de la première couche lorsque ladite première couche (V1) est mise en contact avec ledit rouleau de gaufrage.

4. Procédé selon la revendication 1 ou 2 ou 3, **caractérisé en ce que** ledit motif imprimé est appliqué sur ladite première couche (V1) avant le gaufrage.

5. Procédé selon l'une ou plusieurs des revendications précédentes, **caractérisé par** l'étape consistant à appliquer également un motif imprimé sur la seconde couche (V2), dans une zone correspondant à ladite bande sans colle.

6. Procédé selon l'une ou plusieurs des revendications précédentes, **caractérisé en ce que** ledit motif imprimé est appliqué sur une largeur égale ou légèrement supérieure à la largeur de ladite bande sans colle.

7. Procédé selon l'une ou plusieurs des revendications précédentes, **caractérisé par** l'étape consistant à appliquer sur ladite au moins une première couche (V1) le long d'une pluralité de parties longitudinales adjacentes une colle de même couleur ou de différentes couleurs pour les parties longitudinales, une bande sans colle étant produite entre chaque partie longitudinale et la partie adjacente.

8. Procédé selon la revendication 7, **caractérisé par** l'étape consistant à produire une impression sur chacune desdites bandes sans colle.

9. Procédé selon l'une ou plusieurs des revendications précédentes, **caractérisé par** l'étape consistant à découper ledit matériau de toile dans le sens longitudinal le long d'au moins certaines desdites bandes sans colle.

10. Procédé selon l'une ou plusieurs des revendications précédentes, **caractérisé par** les étapes consistant à enrouler ledit matériau de toile en rondins et à découper lesdits rondins perpendiculairement à leur axe en une pluralité de rouleaux, le long d'au moins certaines desdites bandes sans colle.

11. Procédé selon la revendication 9 ou 10, **caractérisé en ce que** ledit matériau de toile est découpé de manière à diviser le motif imprimé le long d'une ligne intermédiaire, de sorte qu'une partie du motif imprimé demeure sur un premier rouleau et une partie sur un second rouleau adjacent au premier rouleau.

12. Procédé selon l'une ou plusieurs des revendications précédentes, **caractérisé par** l'étape consistant à gaufrer ladite seconde couche (V2).

13. Dispositif (1) destiné à décorer un matériau de toile multicouche, comprenant :
- un trajet pour une première couche (V1) du matériau de toile ;
- le long dudit trajet au moins un rouleau de gaufrage (3), une surface étant pourvue de saillies de gaufrage et coopérant avec un contre-rouleau ;
- une unité de distribution de colle (7) coopérant avec ledit rouleau de gaufrage (3) et conçue pour appliquer de la colle sur au moins une première couche (V1) de matériau de toile sur des parties longitudinales adjacentes espacées les unes des autres par une bande longitudinale sans colle de ladite première couche ;
**caractérisé en ce qu'**il comprend une unité d'impression (51) de ladite au moins une première couche (V1), agencée et conçue pour produire un motif imprimé sur ladite au moins une première couche (V1), en correspondance de ladite bande longitudinale sans colle.

14. Dispositif (1) selon la revendication 13, **caractérisé en ce que** ledit distributeur de colle (7) est conçu et agencé pour appliquer de la colle de différentes couleurs sur lesdites parties longitudinales adjacentes de ladite première couche (V1).

15. Dispositif (1) selon la revendication 13 ou 14, **caractérisé en ce que** ladite unité d'impression (51) est agencée le long dudit trajet d'amenée de ladite première couche (V1) en amont de l'unité de gaufrage.

16. Dispositif (1) selon la revendication 13 ou 14, **caractérisé en ce que** ladite unité d'impression (51) est agencée le long dudit trajet d'amenée de ladite première couche (V1) en aval de ladite unité de gaufrage.

17. Dispositif (1) selon l'une ou plusieurs des revendications 13 à 16, **caractérisé en ce qu'**il comprend un second trajet pour une seconde couche (V2) du matériau de toile, et des moyens de pression pour coller ensemble ladite première couche (V1) et ladite seconde couche.

18. Dispositif (1) selon la revendication 17, **caractérisé en ce qu'**un second rouleau de gaufrage est agencé le long dudit second trajet.

19. Dispositif (1) selon la revendication 17 ou 18, **caractérisé en ce qu'**une seconde unité d'impression en phase avec la première unité d'impression est agencée le long dudit second trajet pour décorer la seconde couche (V2) pour coïncider avec le motif imprimé de la première couche.

20. Produit constitué d'une feuille multicouche de papier mousseline, comprenant au moins deux couches reliées ensemble par collage avec une colle colorée, appliquée sur au moins certaines saillies parmi une pluralité de saillies de gaufrage prévues sur au moins une desdites couches, **caractérisé en ce qu'**il présente deux bandes latérales (SA, SB, BA, BB) sans colle colorée, sur lesquelles est disposée une décoration imprimée.

21. Produit selon la revendication 20, **caractérisé en ce que** ladite décoration imprimée ne fait pas saillie ou ne fait saillie que d'une façon limitée desdites bandes latérales, la zone restante du produit sur laquelle ladite colle est appliquée étant sensiblement exempte dudit motif imprimé.

22. Produit selon la revendication 20 ou 21, **caractérisé en ce qu'**il est constitué par un rouleau de matériau de toile enroulé, lesdites deux bandes latérales étant prévues le long des bords longitudinaux du matériau de toile.
